# EUROPÄISCHE PATENTANMELDUNG

(11) **EP 4 786 765 A2**
(43) Veröffentlichungstag der Anmeldung: **05.08.2026**
(21) Anmeldenummer: 26180251.6
(22) Anmeldetag: 29.11.2021
(51) Int. Cl.: F02B 19/10

(54) **KRAFTSTOFFVERSORGUNGSEINRICHTUNG ZUM ZUFÜHREN EINES KRAFTSTOFFS UND EINE VERBRENNUNGSKRAFTMASCHINE**

(30) Priorität: 22.02.2021 CH 1792021
(62) Teilanmeldung aus: 21211023.3
(71) Anmelder: Liebherr Machines Bulle SA, 1630 Bulle (CH)
(72) Erfinder: SEBA, Dr. Bouzid, 1632 Broc (CH); WEISS, Ulrich, 1752 Villars-sur-Glâne (CH); GOBIN, Pierre, 2350 Saignelégier (CH)
(74) Vertreter: Lorenz Seidler Gossel Part. mbB

(57) **Zusammenfassung**

Die Erfindung betrifft eine Kraftstoffversorgungseinrichtung zum Zuführen eines Kraftstoffs an eine Verbrennungskraftmaschine, umfassend:
einen Kraftstoffspeicher zur Speicherung eines Primärkraftstoffes
und wenigstens zwei parallelen Kraftstoffzuführungspfade, die einerseits mit dem Kraftstoffspeicher und andererseits mit der Verbrennungskraftmaschine verbunden sind, wobei mittels des ersten Kraftstoffzuführungspfad der Primärkraftstoff aus dem Kraftstoffspeicher der Verbrennungskraftmaschine zum Zwecke der Verbrennung zuführbar ist, und der zweite Kraftstoffzuführungspfad wenigstens eine Reformierungsvorrichtung aufweist, der den aus dem Kraftstofftank zugeführten Primärkraftstoff in einen Sekundärkraftstoff reformiert, und um zumindest einen Teil des erzeugten Sekundärkraftstoffes der Verbrennungskraftmaschine zum Zwecke der Verbrennung zuzuführen

## Beschreibung

Die Erfindung betrifft eine Kraftstoffversorgungseinrichtung zum Zuführen eines Kraftstoffes an eine Verbrennungskraftmaschine.

Der Umstieg in eine regenerativbasierte Energiewirtschaft wird gesellschaftspolitisch zunehmend stärker eingefordert. Neben der Nutzung solcher auf Biomasse basierender Kraftstoffe, die bereits seit langem bis zu einem gewissen Anteil nachhaltig erzeugt werden, und der Elektromobilität, welche fahrzeugseitig die Einsatzmöglichkeit von regenerativ erzeugter elektrischer Energie bietet, existieren als weitere Kategorie solche Kraftstoffe, die durch elektrische Energie synthetisch erzeugt werden können. Letztere können selbstverständlich auch auf regenerativ basierter elektrischer Energie basieren.

Der bekannteste Vertreter solcher Kraftstoffe und zugleich von überragender technischer Bedeutung innerhalb dieser Kategorie ist der Wasserstoff. Sieht man von dem Ressourceneinsatz für die Produktionsstätten und das Verteilungssystem ab, kann Wasserstoff nahezu klimaneutral bereitgestellt werden. Wasserstoff kann in mobilen Brennstoffzellenantrieben und somit in tatsächlich emissionsfreien (Zero Emission) Fahrzeugen eingesetzt werden. Doch deutlich bessere wirtschaftliche Konkurrenzfähigkeit zu konventionellen Fahrzeugantrieben lässt sich durch den Einsatz von Wasserstoffverbrennungsmotoren erzielen, die extrem niedrige Schadstoffemissionen aufweisen. Gegenüber der Speicherung von Benzin und Dieselkraftstoff weisen die physikalischen Speicherverfahren von molekularem Wasserstoff den Nachteil auf, dass bei Letzterem die volumetrische Energiedichte deutlich niedriger ist und/oder ein solches Speichersystem sehr aufwendig ist.

Eine alternative Möglichkeit zur Kraftstoffspeicherung sind sogenannte Stoffspeicher. Zu den bekanntesten Arten solcher Wasserstoffstoffspeicher zählen flüssige, organische Wasserstoffträger. Es handelt sich hierbei um eine chemische Verbindung, die Kohlenstoff enthält und der man bei der sogenannten Hydrierung Wasserstoff zuführen kann. Bei einer späteren Dehydrierung kann der Wasserstoff wieder freigesetzt werden. Darauf aufbauend wurden bereits Wasserstofffahrzeuge entwickelt, bei denen der als Kraftstoff dienende Wasserstoff chemisch in einem anderen Stoff gebunden ist. Für die Bereitstellung des Wasserstoffes in seiner Molekularform für die Verbrennung ist eine sogenannte On-board-Reformierung im Fahrzeug erforderlich. Bei den vorbekannten Lösungen durchläuft der gesamte dem Kraftstofftank entnommene Kraftstoff auf seiner Hinführung zur Nutzung in der Verbrennungskraftmaschine diesen Reformierungsprozess. Je nach dem zur Anwendung kommenden spezifischen Reformationsprozess und der konkreten Ausführung der Reformierungsvorrichtung ergibt sich dadurch ein unterschiedlicher Bedarf an Prozessenergie und benötigtem Bauraum.

Die Aufgabe der vorliegenden Erfindung besteht darin, ausgehend von dem aus dem Stand der Technik bekannten Prinzip einen Weg aufzuzeigen, der den Aufwand bei der notwendigen On-board-Reformierung deutlich reduziert.

Die Aufgabe wird gelöst durch eine Kraftstoffversorgungseinrichtung gemäß den Merkmalen des Anspruchs 1. Vorteilhafte Ausführungen der Kraftstoffversorgungseinrichtung sind Gegenstand der abhängigen Ansprüche. Gelöst wird die Aufgabe entsprechend durch ein System gemäß Anspruch 16 sowie das Verfahren zur Kraftstoffversorgung einer Verbrennungskraftmaschine gemäß den Merkmalen des Anspruchs 17.

Erfindungsgemäß wird im Gegensatz zu der aus dem Stand der Technik vorbekannten On-board-Reformierung vorgeschlagen, lediglich einen verhältnismäßig kleinen Anteil des Primärkraftstoffes mittels einer integrierten Reformierungsvorrichtung in einen Sekundärkraftstoff zu reformieren. Der überwiegende Anteil des Kraftstoffes wird nicht reformiert, d.h. bleibt chemisch unbehandelt, und wird als Primärkraftstoff der Verbrennungskraftmaschine zur Verbrennung zugeführt. Zumindest ein Teil des unter Zuführung von Primärkraftstoff in der Reformierungsvorrichtung erzeugten ersten Reformats wird der Verbrennungskraftmaschine als Sekundärkraftstoff zugeführt. Auf diese Weise wird ein Dual-Kraftstoffmotor realisiert, wobei beide Kraftstoffarten aus dem gemeinsamen Kraftstofftank entstammen. Die Zuführung des mittels einer Reformierung bereitgestellten Sekundärkraftstoffes dient zur Optimierung des Verbrennungsprozesses und/oder ermöglicht gar erst das zuverlässige Zünden des Primärkraftstoffes. Insbesondere kann der Sekundärkraftstoff als Zündverstärker während des Verbrennungsprozesses fungieren. Auch kann der Sekundärkraftstoff dazu dienen, die Qualität des Primärkraftstoffes durch Beimischung zu verbessern.

Zur Bereitstellung des Primär- und Sekundärkraftstoffes wird gemäß der Erfindung daher vorgeschlagen, einen gemeinsamen Kraftstofftank vorzusehen, der als gemeinsame Kraftstoffquelle für mindestens zwei unterschiedliche Kraftstoffzuführungspfade dient. Über den ersten Kraftstoffzuführungspfad ist der Kraftstofftank mit der Verbrennungskraftmaschine verbunden, um den im Speicher enthaltenen Primärkraftstoff ohne chemische Behandlung der Verbrennungskraftmaschine für die Verbrennung zuzuführen. Ein zweiter Kraftstoffzuführungspfad umfasst die vorab bereits angesprochene Reformierungsvorrichtung, die den aus dem Kraftstofftank, der im Folgetext als Primärkraftstoffspeicher bezeichnet wird, zugeführten Primärkraftstoff chemisch behandelt bzw. in der eine chemische Aufspaltung erfolgt und als erstes Reformat einen Sekundärkraftstoff bereitstellt. Dieser Sekundärkraftstoff wird stromabwärts der Reformierungsvorrichtung der Verbrennungskraftmaschine als Sekundärkraftstoff zugeführt.

Gemäß einer vorteilhaften Ausführung kann vorgesehen sein, dass der zweite Kraftstoffzuführungspfad eine Zuleitung des Sekundärkraftstoffes in die jeweiligen Brennräume der Verbrennungskraftmaschine ermöglicht, insbesondere eine zum Primärkraftstoff separate Einspritzung in die jeweiligen Brennräume. Bevorzugt ist der Sekundärkraftstoff der Verbrennungskraftmaschine als Pilotkraftstoff zuführbar, vorzugsweise in einem lokal begrenzten Teilbereich des Brennraums verbleibend und zwar in dem Teilbereich, in dem der Energieeintrag der externen Zündvorrichtung erfolgt. In diesem Fall kann mittels des Sekundärkraftstoffes eine Primärzündung innerhalb eines Brennraums ausgelöst werden, bei der im Wesentlichen der Primärkraftstoff verbrannt wird, und die als Zündverstärkung für das Auslösen einer Sekundärzündung dient. Insgesamt kann auf diese Weise der gesamte Verbrennungszyklus verbessert und/oder gar erst das zuverlässige Zünden des Primärkraftstoffes ermöglicht werden. Das Auslösen einer Primärzündung mittels des Sekundärkraftstoffes stellt eine vergleichsweise hohe Aktivierungsenergie zur Auslösung der Verbrennung des Primärkraftstoffes dar und bietet daher die Möglichkeit zur Optimierung des Luft-/Primärkraftstoffgemisches hinsichtlich eines möglichst vorteilhaften Austarierens der Energieeffizienz und der Rohemissionen der Verbrennungskraftmaschine. Gleichermaßen kann mittels der Zuführung des Sekundärkraftstoffes unter der Zielsetzung einer gewissen oder starken Homogenisierung die Qualität des Kraftstoff-Luftgemisches entsprechend angehoben werden, die unter einer alleinigen Verwendung des Primärkraftstoffes nicht besteht.

Der Sekundärkraftstoff muss jedoch nicht zwingend innerhalb des eigentlichen Brennraums gezündet werden. Alternativ besteht die Möglichkeit die Primärzündung in einem räumlich von dem Brennraum; für diesen Fall genauer ausgedrückt in einem räumlich von dem Hauptbrennraum getrennten Bereich zu bewirken. Denkbar ist dies bei einer Ausführung der Verbrennungskraftmaschine mit wenigstens einem gespülten Vorkammerzündsystem, das im Folgetext zur Vereinfachung als gespülte Vorkammer bezeichnet wird. In diesem Fall kann der zweite Kraftstoffzuführungspfad zur Einbringung des Sekundärkraftstoffes in die gespülte Vorkammer geeignet ausgestaltet sein. Über eine Fluidverbindung zwischen der Vorkammer und dem Hauptbrennraum kann der in der Vorkammer ausgelöste Brennprozess eine Sekundärzündung innerhalb der Hauptkammer auslösen. Zudem schießt der noch nicht in der Vorkammer entzündete des Sekundärkraftstoff aus der Vorkammer in den Hauptbrennraum hinein und bildet dort räumlich voneinander getrennte Zündherde aus.

Auch besteht die Möglichkeit, dass der Sekundärkraftstoff in einer geringen Teilhomogenisierung bis hin zu einer vollkommenen Homogenisierung mit dem Primärkraftstoff vermischt und innerhalb des Brennraums bzw. des Hauptbrennraums verbrannt wird. Auch bei einem solchen Systemansatz kann eine Vorkammer zum Einsatz kommen, dann jedoch bevorzugt ein ungespültes Vorkammerzündsystem. Durch eine entsprechende Lage des Zuführungsortes des Sekundärkraftstoffes im Hauptbrennraum und dem Zeitraum resp. dem Kurbelwellenwinkelbereich seiner Zuführung, lässt sich erreichen, dass in der Vorkammer ein höherer Anteil des Sekundärkraftstoffes enthalten ist als in dem Hauptbrennraum.

Das ungespülte Vorkammerzündsystem kann bspw. durch eine Vorkammerzündkerze oder durch eine separate Vorkammer mit einer konventionellen Zündkerze bzw. einem anderen externen Zündsystem gebildet sein. Im Folgetext wird auch für ein ungespültes Vorkammerzündsystem die Vereinfachung ungespülte Vorkammer verwendet.

Insbesondere bei dem Einsatz einer gespülten Vorkammer lässt sich das Verbrennungsluftverhältnisses Lambda relativ genau bzw. sogar sehr genau auf einen gewünschten Wert einstellen. Sofern in der Vorkammer eine möglichst hohe Freisetzung von thermischer Energie gewünscht wird, die in Form der sogenannten Zündfackeln in den Hauptbrennraum hineinschiesst, wird darin ein stöchiometrisches Verbrennungsluftverhältnisses (Lambda = 1) angestrebt. Soll hingegen ein vergleichsweise hoher Anteil an noch nicht entzündetem Kraftstoff aus der Vorkammer in den Hauptbrennraum hineinschießen, um dort möglichst viele räumlich voneinander getrennte und/oder möglichst starke Zündherde auszubilden, kann in der Vorkammer ein Kraftstoffüberschuss (Lambda < 1) vorgesehen sein. Anstatt einer fortwährenden Unterscheidung zwischen *Brennraum* und *Hauptbrennraum* wird zur besseren Lesbarkeit im Folgetext nur noch der Begriff *Brennraum* verwendet und zwar auch dann, wenn es sich um eine mit Vorkammern ausgestattete Verbrennungskraftmaschine handelt.

Der erste Kraftstoffzuführungspfad kann für eine Zuführung des Primärkraftstoffes auf unterschiedliche Weise ausgelegt sein. Denkbar ist es, dass der Primärkraftstoff mittels des ersten Kraftstoffzuführungspfades einem Einspritzsystem der Verbrennungskraftmaschine zugeführt wird, insbesondere einem Hochdruckspeicher des Einspritzsystems. Mittels des Einspritzsystems kann der Primärkraftstoff direkt in die Brennräume eingespritzt werden. Alternativ könnte der erste Kraftstoffzuführungspfad ausgelegt sein, den Primärkraftstoff einem Saugrohr der Verbrennungskraftmaschine zuzuführen. Ist ein Luft-/Kraftstoffmischer vorgesehen, kann der erste Verbindungspfad auch mit diesem in Verbindung stehen.

Die Verbrennungskraftmaschine kann gemäß einer möglichen Ausführung mit einer Abgasnachbehandlungseinrichtung ausgestattet sein. Die Zugabe eines Reduktionsmittels bei der Abgasnachbehandlung ist bekannt. Ein vorteilhafter Ansatz der vorliegenden Erfindung besteht darin, dieses Reduktionsmittel aus dem Primärkraftstoffspeicher bereitzustellen. Vorstellbar ist es in diesem Zusammenhang, den Primärkraftstoff in seiner gespeicherten Form als Reduktionsmittel bereitzustellen. In diesem Fall kann ein weiterer Versorgungspfad vorgesehen sein, der ausgehend vom Primärkraftstoffspeicher als Quelle der Abgasnachbehandlungseinrichtung den unbehandelten Primärkraftstoff als Reduktionsmittel zuführt.

Unter Umständen kann es jedoch sinnvoll sein, nicht den Primärkraftstoff, sondern ein Reformationsprodukt der Reformierungsvorrichtung, insbesondere das erste Reformat, d.h. den Sekundärkraftstoff, als Reduktionsmittel der Abgasnachbehandlung zuzuführen. In diesem Fall weist der zweite Kraftstoffzuführungspfad wenigstens eine, stromabwärts der Reformierungsvorrichtung angeordnete Abzweigung auf, über die ein Teil des Sekundärkraftstoffes der Abgasnachbehandlungseinrichtung zuführbar ist. Auch könnte der weitere Versorgungspfad mit einer zusätzlichen, für die Erzeugung eines Reduktionsmittels aus dem Primärkraftstoff geeigneten Reformierungsvorrichtung erweitert sein.

Stromabwärts nach der Reformierungsvorrichtung kann gemäß vorteilhafter Ausführungsform wenigstens ein Sekundärkraftstoffspeicher vorgesehen sein. Mittels des Sekundärkraftstoffspeichers kann zumindest temporär ein konstantes Druckniveau des Sekundärkraftstoffes bei der Zuführung zur Verbrennungskraftmaschine bereitgestellt werden, und zwar unabhängig vom Betrieb der Reformierungsvorrichtung. Der Sekundärkraftstoffspeicher kann beispielsweise als Druckspeicher ausgeführt sein. Insbesondere ist die Integration eines Sekundärkraftstoffspeichers sinnvoll, wenn die Reformierungsvorrichtung unter bestimmen Betriebsbedingungen nicht oder nur eingeschränkt arbeitet. Ein Beispiel dafür ist bspw. der Kaltstart der Verbrennungskraftmaschine. Je nach dem für das erfindungsgemäße System vorgesehenen Primärkraftstoff, d.h. der erforderlichen chemischen Reaktion und dem Oberflächenmaterial des Katalysators in der Reformierungsvorrichtung ist für deren Ingangsetzung ein bestimmtes Temperaturniveau notwendig. Insbesondere die aktive Oberfläche der Reformierungsvorrichtung muss die notwendige Reaktionstemperatur aufweisen. Unmittelbar nach dem Kaltstart liegen die thermischen Voraussetzung möglicherweise nicht vor, so dass während dieser Zeitspanne die Versorgung mit Sekundärkraftstoff ausschließlich aus dem Sekundärkraftstoffspeicher erfolgen kann. Auch ist vorstellbar, dass unter gewissen Lastbedingungen der Verbrennungskraftmaschine der Reformierungsprozess temporär zu deaktivieren ist bzw. gar nicht möglich ist. Zur Überbrückung einer solchen temporären Deaktivierung kann eine Versorgung der Verbrennungskraftmaschine aus dem Sekundärkraftstoffspeicher erfolgen.

Wie bereits vorstehend angedeutet, kann der Sekundärkraftstoff als Reduktionsmittel für eine Abgasnachbehandlung Verwendung finden. In diesem Fall kann es sinnvoll sein, einen Sekundärkraftstoffspeicher als Quelle hierfür einzusetzen. Der benötigte Abzweig des zweiten Versorgungspfades ist dann stromabwärts nach dem Sekundärkraftstoffspeicher angeordnet.

Denkbar ist es auch, wenigstens einen Kompressor bzw. eine Pumpe stromabwärts nach der Reformierungsvorrichtung einzubinden, um den Sekundärkraftstoff auf ein höheres Druckniveau anzuheben und diesen unmittelbar in die Vorkammer oder in den Brennraum der Verbrennungskraftmaschine einzuspitzen. Bevorzugt wird der mittels eines Kompressors bzw. einer Pumpe auf ein höheres Druckniveau angehobene Sekundärkraftstoff innerhalb eines Sekundärkraftstoffspeichers, der dann als Druckspeicher ausgeführt sein kann, gespeichert und von dort aus in die Vorkammer oder in den Brennraum der Verbrennungskraftmaschine zugeführt. Alternativ oder ergänzend besteht solche eine Anordnung, womit der Vorkammer bzw. dem Brennraum der Verbrennungskraftmaschine bei Verfügbarkeit Sekundärkraftstoff unmittelbar von einem Kompressor bzw. einer Pumpe oder aus dem Sekundärkraftstoffspeicher zugeführt werden kann.

Der Primärkraftstoff kann ein flüssiger oder gasförmiger Kraftstoff, insbesondere ein Niederdruckgas, sein. Der Primärkraftstoffspeicher kann als Behälter zur Speicherung eines flüssigen und/oder gasförmigen Primärkraftstoffes ausgelegt sein. Handelt es sich bei dem Primärkraftstoff um einen gasförmigen Kraftstoff, wird bevorzugt ein Flüssiggasspeicher als Primärkraftstoffspeicher eingesetzt. Sofern der Primärkraftstoff im Primärkraftstoffspeicher in Flüssigform vorliegt, erfolgt bevorzugt bereits eine Verdichtung bevor dieser ggf. in die Gasphase übergeht. Bei der Ausführung des Primärkraftstoffspeichers als Flüssiggasspeicher bzw. Flüssigspeicher kann wenigstens eine Kraftstoffförderpumpe im Inneren des Kraftstofftank Primärkraftstoffspeichers integriert sein. Bevorzugt stellt eine solche Kraftstoffförderpumpe auf ihrer Oberdruckseite einen Druck bereit, der das notwendige Druckniveau, welches für die Kraftstoffförderung bis zur Verbrennungskraftmaschine erforderlich ist, deutlich übersteigt, so dass bereits im flüssigen Aggregatszustand des Primärkraftstoffes eine weitere Verdichtung erreicht wird. Besonders bevorzugt fördert die Förderpumpe mit einem Ausgangsdruckniveau von mindestens 50 bar. Optional kann ein höheres Druckniveau durch Hinzunahme weiterer Pumpen und/oder Kompressoren erzielt werden.

Vorteilhaft ist die Verwendung von Ammoniak (NH₃) als Primärkraftstoff, da der zur Herstellung benötigte Wasserstoff sowie die zur Hydrierung benötigte Prozessenergie zumindest überwiegend durch elektrische, insbesondere regenerativ generierte Energie erzeugt werden kann. Aus Ammoniak lässt sich mittels der Reformierungsvorrichtung als erstes Reformat molekularer Wasserstoff, der als Sekundärkraftstoff verwendet werden soll, gewinnen. Der während des Reformierungsprozesses als zweites Reformat erzeugte Stickstoff kann nach einer ggf. erforderlichen einfachen Nachbehandlung an die Umwelt abgegeben werden oder prinzipiell für eine spätere Verwendung in einem gesonderten Speicher des Fahrzeuges aufgefangen werden. Da die Erdatmosphäre einen Sickstoffanteil von ca. 80 % aufweist, wird Ersteres bevorzugt.

Grundsätzlich kann ein neben dem Sekundärkraftstoff als erstes Reformat erzeugtes weiteres Reformat auch in einem zusätzlichen Speichermittel gespeichert werden, welches dem Primärkraftstoffspeicher angegliedert sein kann, bspw. indem eine Ausführung als Faltenbalgtank oder Kolbenspeicher gewählt wird. Denkbar ist es ebenso das weitere Reformat über eine Zuleitung dem Ladeluftpfad der Verbrennungskraftmaschine zuzuführen und zwar bevorzugt strömungsabwärts des Ladeluftkühlers. Insbesondere im Fall von Stickstoff als weiteres Reformat erscheint dies möglich und sinnvoll zu sein.

Für den Reformierungsprozess innerhalb des zweiten Versorgungspfades muss, wie bereits vorstehend erläutert, ein bestimmtes Mindesttemperaturniveau der aktiven Oberflächen des Reformators bzw. des integrierten Katalysators überschritten werden. Daneben sollte auch der dem Reformierungsprozess zugeführte Primärkraftstoff bereits eine vorteilhafte Konditionierung aufweisen, damit eine möglichst hohe Konversionsrate vorliegt. Eine Konversionsrate von 1 bzw. 100 % würde im Fall der Verwendung von Ammoniak als Primärkraftstoff bedeuten, dass als erstes Reformat und damit als Sekundärkraftstoff reiner Wasserstoff zur Verfügung steht und das zweite Reformat reiner Stickstoff ist. Bevorzugt ist daher im erfindungsgemäßen System wenigstens ein Mittel zur Konditionierung des Primärkraftstoffes vor der Zuführung zur Reformierungsvorrichtung integriert. Insbesondere kann eine Vorerwärmung erforderlich oder zumindest sehr vorteilhaft sein. Für diesen Fall ist vorgesehen, stromaufwärts vor der Reformierungsvorrichtung wenigstens einen Wärmetauscher zu integrieren, um den durch seine Primärseite durchströmenden Primärkraftstoff auf ein gewünschtes Temperaturniveau oder zumindest in dessen Richtung oder über dieses Temperaturniveau hinaus anzuheben. Als Wärmeträger kann Gas oder Flüssigkeit durch die Sekundärseite dieses Wärmetauschers hindurchgeleitet werden. Denkbar ist beispielsweise, dass der Wärmetauscher durch das Flüssigkeitskühlmittel oder einen sonstigen Wärmeträger der Verbrennungskraftmaschine durchströmbar ist. Denkbar ist es auch, dass die auf der Sekundärseite eines Wärmetauschers zugeführte thermische Leistung aus dem Abgas entnommen wird. Insbesondere kann durch die Sekundärseite des Wärmetauschers ein Teil des Motorabgases hindurchgeleitet werden, das bereits stromaufwärts der Abgasnachbehandlungseinrichtung oder sogar bereits stromaufwärts der Turbine des Abgasturboladers von dem eigentlichen Abgaspfad ausgeleitet wird. Aufgrund der vergleichsweise geringen Menge des im zweiten Verbindungspfad strömenden Primärkraftstoffes ist das aus dem Abgasstrang entnommene Abgasvolumen vergleichsweise gering, sodass es keine oder nur unwesentlichen Performanceeinbußen bei der Abgasnachbehandlung und/oder bei der Ladeluftverdichtung mittels Turbolader entstehen.

Ebenso kann vorgesehen sein, dass die Reformierungsvorrichtung ein integrales Heizelement aufweist, um die aktiven Oberflächen des integralen Katalysators thermisch zu erwärmen. Alternativ oder in Ergänzung dazu kann die Reformierungsvorrichtung auch eine Abgaszuführungsleitung aufweisen, um der Reformierungsvorrichtung einen Teilvolumenstrom des Abgases der Verbrennungskraftmaschine zuzuführen. Das durch die Reformierungsvorrichtung strömende Abgas führt zu einer thermischen Erwärmung der Oberflächen des integralen Katalysators, sodass der gesamte Reformierungsprozess in Gang gesetzt wird oder mit einer höheren Konversionsrate abläuft. Der besagte Teilvolumenstrom kann dabei bereits stromaufwärts der Abgasnachbehandlungseinrichtung oder sogar bereits stromaufwärts der Turbine des Abgasturboladers von dem eigentlichen Abgaspfad ausgeleitet werden.

Aufgrund der vergleichsweise geringen Menge des Sekundärkraftstoffes und der damit einhergehenden klein dimensionierten Reformierungsvorrichtung ist der dafür benötigte abgezweigte Teilvolumenstrom des Motorabgases vergleichsweise gering, sodass auch dadurch keine Einbußen bei einer mittels Abgasturbolader aufgeladenen Verbrennungskraftmaschine und/oder der Abgasnachbehandlung zu erwarten sind.

Auch kann die durch die Reformierungsvorrichtung und/oder die durch die Sekundärseite des besagten Wärmetauschers zur Vorwärmung des Primärkraftstoffes durchströmte Abgasmenge ohne nachgeschaltete Behandlung der Ladeluft der Verbrennungskraftmaschine zugeführt werden, insbesondere ist keine weitere Kühlung dieses Abgasteilstroms notwendig, da diese Menge im Vergleich zur Ladeluftmenge verhältnismäßig gering ausfällt und so keine nennenswerte Temperaturerhöhung der in den Brennräumen eingelassenen Luft vorliegt.

Wie zuvor bereits mehrfach angedeutet, ist der Massenstrom des der Verbrennungskraftmaschine zugeführten Sekundärkraftstoffes deutlich geringer als der Massenstrom des Primärkraftstoffes. Im Nennbetrieb der Verbrennungskraftmaschine ist hier beispielsweise ein Verhältnis zwischen Primär- und Sekundärkraftstoff bezogen auf deren Energieeinträge von mindestens 10:1 und bis zu 50:1 möglich.

Die Kraftstoffversorgungseinrichtung kann weiterhin mit einer Einheit versehen sein, die zur Bestimmung einer optimalen Beimischungsrate des Sekundärkraftstoffes zu dem in den Brennraum der Verbrennungskraftmaschine zuzuführenden Primärkraftstoff konfiguriert ist. Die Bestimmung der Beimischungsrate erfolgt bspw. auf Grundlage einer hinterlegten Parametrierung und/oder Modellbildung. Insbesondere ist die optimale Beimischungsrate abhängig von aktuellen Betriebsbedingungen des Gesamtsystems, so dass für die Bestimmung der optimalen Beimischungsrate bspw. der aktuelle Betriebszustand des Verbrennungsprozesses in der Verbrennungskraftmaschine und/oder der Zustand der Abgasnachbehandlungsanlage berücksichtigt wird. Denkbar ist es auch die Qualität des Primärkraftstoffes zu erfassen. Nach Festlegung der optimalen Beimischungsrate kann eine Steuereinheit, die wiederum aus mehreren Steuerungen und Regelungen bestehen kann, dies aktuatorisch umsetzen.

Neben der erfindungsgemäßen Kraftstoffversorgungseinrichtung betrifft die vorliegende Erfindung ebenso ein System bzw. eine mobile oder stationäre Arbeitsmaschine oder ein Fahrzeug umfassend eine Kraftstoffversorgungseinrichtung gemäß der vorliegenden Erfindung, eine Verbrennungskraftmaschine sowie optional eine Abgasnachbehandlungseinrichtung. Die Vorteile und Eigenschaften des erfindungsgemäßen Systems mit der erfindungsgemäßen Kraftstoffversorgungseinrichtung wurden bereits vorstehend umfassend aufgezeigt, weshalb an dieser Stelle auf eine wiederholende Beschreibung verzichtet werden soll.

Die gestellte Aufgabe der vorliegenden Erfindung wird auch durch das korrespondierende Verfahren zur Kraftstoffversorgung gelöst, bei dem einer Verbrennungskraftmaschine als Hauptbrennstoff ein chemisch unbehandelter Primärkraftstoff zugeführt wird. Ein Teil des verfügbaren Primärkraftstoffes wird mittels einer Reformierungsvorrichtung in einen Sekundärkraftstoff reformiert, der der Verbrennungskraftmaschine als Pilotkraftstoff zugeführt wird. Vorteile des erfindungsgemäßen Verfahrens entsprechen denen der erfindungsgemäßen Kraftstoffversorgungseinrichtung. Insbesondere ist das erfindungsgemäße Verfahren mittels einer Kraftstoffversorgungseinrichtung gemäß der vorliegenden Erfindung ausführbar.

Gemäß einer bevorzugten Ausführung des Verfahrens kann vorgesehen sein, dass im Motorbetrieb die Beimischungsrate variierbar ist und bei sich ändernden Bedingungen eine fortlaufende Anpassung vorgesehen ist. Insbesondere kann vorgesehen sein, dass eine optimale Beimischungsrate des Sekundärkraftstoffes zu dem in den Brennraum der Verbrennungskraftmaschine zuzuführenden Primärkraftstoffes bestimmt wird. Die Bestimmung der Beimischungsrate erfolgt bspw. auf Grundlage einer hinterlegten Parametrierung und/oder Modellbildung. Insbesondere ist die optimale Beimischungsrate abhängig von aktuellen Betriebsbedingungen des Gesamtsystems, so dass für die Bestimmung der optimalen Beimischungsrate bspw. der aktuelle Betriebszustand des Verbrennungsprozesses in der Verbrennungskraftmaschine und/oder der Zustand der Abgasnachbehandlungsanlage und/oder die Qualität des Primärkraftstoffes berücksichtigt wird. Nach Festlegung der optimalen Beimischungsrate kann eine Steuereinheit, die wiederum aus mehreren Steuerungen und Regelungen bestehen kann, dies aktuatorisch umzusetzen.

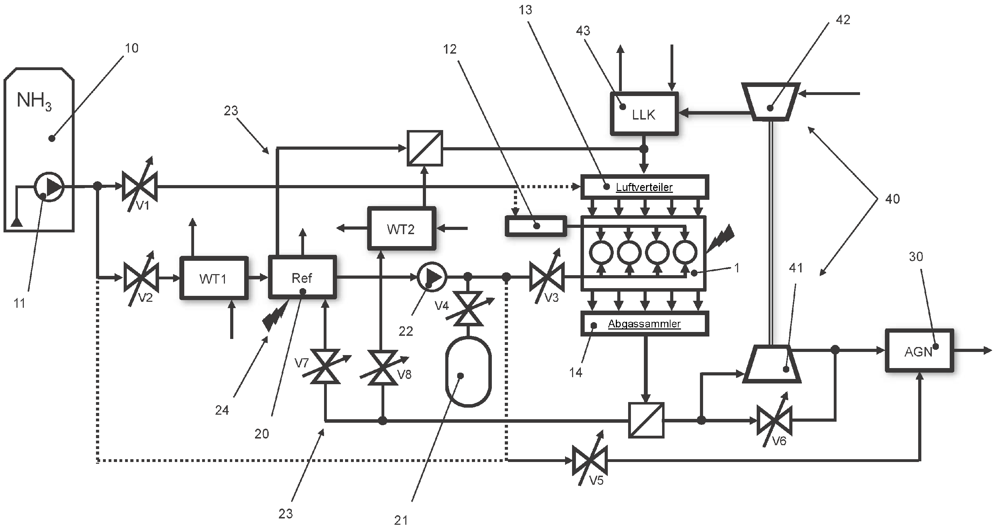

Weitere Vorteile und Eigenschaften sollen anhand der einzigen Figur näher beschrieben werden, wobei die einzige Figur unterschiedliche Ausführungen und Optionen der Erfindung darstellt.

Die einzige Figur zeigt ein Schaltbild eines Ausführungsbeispiels des erfindungsgemäßen Systems bestehend aus der Kraftstoffversorgungseinrichtung, der Zuführungsvorrichtung in verschiedenen Varianten ohne Anspruch auf Vollständigkeit. Die im Schaltbild vorhandenen Pfeile deuten die Flussrichtungen von Stoffströmen an. Durchgängige Linien symbolisieren die für jede Variante bestehenden Verbindungen, wohingegen unterbrochene Linienzüge optionale Alternativvarianten darstellen. Bereits vorwegnehmend sei erwähnt, dass das Vorhandensein eines Abgasturboladers 40 optional ist. Im Erfindungskern ist das Vorhandensein einer Abgasnachbehandlungseinrichtung 30 ebenfalls optional.

Beim Tankvorgang, der hier nicht näher zu betrachten ist, wird ein gasförmiger oder ein flüssiger Kraftstoff dem Primärkraftstoffspeicher 10 zugeführt. Dieser Kraftstoff wird im Folgetext als Primärkraftstoff bezeichnet. Bevorzugt handelt es sich bei dem Primärkraftstoff um einen Flüssigkraftstoff oder ein Niederdruckgas. Sofern es sich bei dem Primärkraftstoffspeicher 10 um einen Flüssig- oder Flüssiggasspeicher handelt, erfolgt bevorzugt eine erste Verdichtung des aus dem Primärkraftstoffspeicher 10 zu entnehmenden bzw. gerade entnommenen Primärkraftstoffes in seinem flüssigen Aggregatzustand. Besonders bevorzugt erfolgt dies über eine Förderpumpe 11, die entsprechend auf ihrer Oberdruckseite einen Druck bereitstellt, der wesentlich höher ist als dies zur Förderung des Primärkraftstoffes erforderlich ist und zwar auf ein Druckniveau von mindestens 50 bar. Sofern es sich bei dem Primärkraftstoffspeicher 10 um einen Flüssig- oder Flüssiggasspeicher handelt, ist ganz besonders bevorzugt die Förderpumpe 11 in dem Inneren des Primärkraftstoffspeicher s integriert. Möglich ist auch die Hinzunahme weiterer Pumpen (hier nicht dargestellt), um das gewünschte Druckniveau zu erreichen bzw. noch weiter zu erhöhen.

Vorteilhaft ist der Einsatz von NH₃ (Ammoniak) als Primärkraftstoff, welches unter einem Druck von ca. 9 bar und einer Temperatur von ca. 15° C eine volumetrische Energiedichte von 3,2 kwh/l aufweist. Zur Bewertbarkeit sei erwähnt, dass für die Speicherung von molekularem Wasserstoff unter 700 bar (15° C) lediglich eine volumetrisch Energiedichte von 1,3 kwh/l vorliegt und bei Dieselkraftstoff (15° C) 10 kWh/l.

In jeder Ausführungsform der Erfindung erfolgt die Weiterleitung des bereitgestellten Primärkraftstoffes über mindestens zwei parallele Kraftstoffzuführungspfade. Über einen ersten Pfad wird der aus dem Primärkraftstoffspeicher 10 entnommene Primärkraftstoff chemisch unverändert der Verbrennungskraftmaschine 1 zugeführt, bspw. in einen Hochdruckspeicher 12 eines Kraftstoff-Einspritzungssystems (in der Figur als Variante eingezeichnet), woraus der Primärkraftstoff direkt in die jeweiligen Brennräume der Verbrennungskraftmaschine 1 einspritzt wird. Alternativ kann der Primärkraftstoff auch in das Saugrohr 13 (als Variante eingezeichnet) oder in einen Luft-Gasmischer (nicht eingezeichnet) zugeführt werden. Das optionale Regelventil V1 regelt den Volumenstrom des Primärkraftstoffes zur Verbrennungskraftmaschine 1.

Über den zweiten dieser mindestens zwei Parallelpfade wird der Primärkraftstoff durch einen sogenannten Reformator 20 geleitet. Darin erfolgt das Abscheiden von molekularem Wasserstoff aus dem Primärkraftstoff. Dieser molekulare Wasserstoff oder ein Teil davon werden der Verbrennungskraftmaschine 1 zugeführt. Der Volumenstrom zum Reformator 20 kann mittels des Ventils V2 eingestellt werden.

Optional kann, wie in der Figur durch die gestrichelte Linie angedeutet, ein vom Primärkraftstoffspeicher 10 ausgehender dritter Parallelpfad existieren, über den der Primärkraftstoff unmittelbar oder mittelbar als Reduktionsmittel dienend der Abgasnachbehandlungseinrichtung 30 zugeführt wird. Sofern es sich bei dem Primärkraftstoff bspw. um Ammoniak (NH₃) handelt, ist alternativ seiner unmittelbaren Nutzung als Reduktionsmittel auch eine mittelbare Nutzung möglich, in dem - wie durch die entsprechende gestrichelte Linie angedeutet - durch die Reformierung erzeugter molekularer Wasserstoff als Reduktionsmittel zum Einsatz kommt. Als weitere Alternative könnte Primärkraftstoff längs des besagten dritten Parallelpfades über einen separaten Reformator (nicht eingezeichnet) mittelbar als Reduktionsmittel genutzt werden. Ein integriertes Steuerventil V5 dient zur Einstellung des Volumenstroms entweder aus dem Primärkraftstoffspeicher 10 oder dem Sekundärkraftstoffspeicher.

Unabhängig davon, ob Reduktionsmittel über den Reformator 20 bezogen wird oder nicht, eine Ausführungsform des erfindungsgemäßen Systems gar keinen Reduktionsmittel-Einsatz vorsieht oder in dieser Ausführungsform sein Reduktionsmittel aus einem separaten Tank bzw. aus einem separaten vorzugsweise im dritten Parallelpfad angeordneten Reformator bezieht, enthält das erfindungsgemäße System bevorzugt einen Sekundärkraftstoffspeicher 21 der besonders bevorzugt als Druckspeicher ausgeführt ist, der molekularen Wasserstoff aus dem Reformator 20 beziehen kann und von dem aus molekularer Wasserstoff der Verbrennungskraftmaschine 1 zugeführt werden kann. Der Sekundärkraftstoffspeicher 21 kann über ein weiteres Ventil V4 angebunden sein. Der Volumenstrom des Sekundärkraftstoffes vom Reformator 20 bzw. dem Sekundärkraftstoffspeicher 21 zur Verbrennungskraftmaschine kann mittels des optionalen Ventils V3 eingestellt werden.

Sofern die Abgasnachbehandlungseinrichtung 30 das Beziehen von über dem Reformator 20 freigesetzten molekularen Wasserstoff als Reduktionsmittel vorsieht, enthält das erfindungsgemäße System bevorzugt einen Speicher, der molekularen Wasserstoff aus dem Reformator 20 beziehen kann und von dem aus molekularer Wasserstoff der Abgasnachbehandlungseinrichtung 30 zugeführt werden kann. Besonders bevorzugt handelt es sich um einen gemeinsamen Speicher, aus dem der Verbrennungskraftmaschine 1 und der Abgasnachbehandlungseinrichtung 30 molekularer Wasserstoff zugeführt werden kann (vgl. Figur), der ganz besonders bevorzugt als Druckspeicher ausgeführt ist.

Das Vorhandensein derart angeordneter oder eines zur gemeinsamen Nutzung angeordneten Sekundärkraftstoffspeichers 21 hat den Vorteil, dass vorübergehend auch dann genügend molekularer Wasserstoff bereitgestellt werden kann, wenn der Reformator 20 nicht genügend oder gar keinen molekularen Wasserstoff freisetzen kann, z.B. bei einem Motorstart und während des Motorbetriebes vor Erreichung der Betriebstemperatur des Reformators 20.

Das Vorhandensein von gespeichertem molekularen Wasserstoff hat den Vorteil, dass dieser bei einem gewünschten Motorstart sofort verfügbar ist und nicht erst erzeugt werden muss. Darüber hinaus könnte der benötigte im Primärkraftstoff enthaltene Wasserstoff im Normalfall unter Ausnutzung von Motorabwärme reformiert werden, d.h. energetisch effizienter bereitgestellt werden als durch eine on-line Produktion bei ausgekühlter Verbrennungskraftmaschine 1, bei der die im Reformator 20 benötigte thermische Leistung unter einem direkten energetischen Mehrverbrauch aufgewendet werden müsste. Bei einem entsprechend grossen Vorrat im Sekundärkraftstoffspeicher 21 kann der Verbrennungskraftmaschine 1 solcher energetisch effizienter reformierte molekulare Wasserstoff solange bereitgestellt werden, bis die Verbrennungskraftmaschine 1 ihrerseits eine ausreichend hohe thermische Abgasenergie bereitstellen kann und bereits ferner vorrangig den thermischen Leistungsbedarf der Turbine 41 des Turboladers 40 und der Abgasnachbehandlungseinrichtung 30 abgedeckt hat.

Bevorzugt weist das erfindungsgemäße System mindestens einen Kompressor 22 auf, damit der vom Reformator 20 freigesetzte Wasserstoff der Verbrennungskraftmaschine 1 dem Sekundärkraftstoffspeicher 21 und/oder der Abgasnachbehandlungseinrichtung 30 unter erhöhtem Druck zugeführt werden kann. Im Ausführungsbeispiel verfügen die Brennräume der Verbrennungskraftmaschine 1 jeweils über eine Vorkammer, denen der molekularer Wasserstoff zugeführt wird. Bezogen auf den Energieinhalt ist im Nennbetrieb der Verbrennungskraftmaschine 1 die Menge des zugeführten Primärkraftstoffs in etwa 50 Mal so hoch als die des den Vorkammern zugeführten molekularen Wasserstoffes. Demnach kann der Reformator 20 des erfindungsgemäßen Systems um Grössenordnungen kleiner sein als ein Reformator, der den gesamten Kraftstoffbedarf einer vergleichbaren Verbrennungskraftmaschine 1 bereitstellt.

Damit in dem Reformator 20 aus dem zugeführten Primärkraftstoff eine Freisetzung des molekularen Wasserstoffs erfolgen kann und dies zudem mit einer ausreichend hohen Konversionsrate, müssen die Temperaturen der aktiven Oberflächen des Katalysators und der damit in Berührung kommende Primärkraftstoff ausreichend hoch sein. Im Ausführungsbeispiel wird dem Reformator 20 thermische Energie aus dem Abgas der Verbrennungskraftmaschine 1 zugeführt. Bevorzugt wird dabei dem Reformator 20 ein Abgasteilstrom 23 zugeleitet, wobei dieser Abgasteilstrom 23 bereits strömungsaufwärts der Turbine 41 des Abgasturboladers 40, d.h. möglichst unmittelbar am Abgassammler 14 entnommen wird. Das Ventil V7 dient zur Einstellung/Regelung des vom Abgassammler 14 entnommenen Volumenstroms.

Klarerweise müssen der sich durch den Reformator 20 erstreckende Abgasteilstrom 23 und der Kraftstoffpfad hermetisch voneinander getrennt sein. So können bspw. die aktiven Oberflächen des Katalysators auf einem Trägermaterial aufgebracht sein, welches über eine hohe thermische Leitfähigkeit mit den Wandflächen von dem mit Abgas durchströmten Kanal bzw. Kanalsystem verbunden ist.

Da im erfindungsgemäßen System in Bezug auf die Motorleistung lediglich eine vergleichsweise geringe Mengen an molekularem Wasserstoff benötigt wird, und der Reformator 20 entsprechend klein ausgelegt werden kann, ist der zum Beheizen des Reformators 20 benötigte Abgasmassenstrom sehr viel kleiner als der vom Ladeluftkühler 43 kommende Massenstrom der Ladeluft, weswegen der durch den Reformator 20 durchströmende Abgasteilstrom 23 thermodynamisch unproblematisch dem Ladeluftpfad zugemischt werden kann ist, auch dann, wenn man verbrennungstechnisch eigentlich keine Abgasrückführung wünscht. Ferner ist das weitere Abkühlen des Abgasteilstroms 23 auf ein Temperaturniveau, welches in etwa dem der Ladeluft am Zuströmungsort entspricht, auch nicht nötig. Bevorzugt befindet sich der Zuströmungsort des Abgasteilstroms in den Ladeluftpfad strömungsabwärts des Ladeluftkühlers 43. Zugleich ist die der Turbine 41 des Abgasturboladers 40 entzogene Abgasenergiemenge so niedrig, dass sich bei der Wirksamkeit der Aufladung der Verbrennungskraftmaschine 1 kein spürbares Nachlassen zeigt; insbesondere auch nicht bei dem sogenannten Turboloch, d.h. einem transienten Anstieg des Lastmomentes der Verbrennungskraftmaschine 1 bei geringer Kurbelwellendrehzahl. Bei Vorhandensein des besagten Sekundärkraftstoffspeichers 21 und einer darin vorhandenen entsprechenden Vorratsmenge kann bei einer niedrigen Kurbelwellendrehzahl der Verbrennungskraftmaschine 1 die Wasserstoff-Reformierung vorübergehend stillgelegt werden und demzufolge die gesamte Abgasmenge der Turbine 41 bereitgestellt werden. Ergänzend oder alternativ kann zur Beheizung des Reformators 20 anderweitig thermische Energie zugeführt werden, z.B. durch eine optionale elektrische Heizung 24.

Ferner kann strömungsaufwärts des Reformators 20 eine Konditionierung des Primärkraftstoffes sinnvoll bzw. notwendig sein, z.B. das Anheben oder Absenken auf ein bestimmtes Druckniveau und/oder eine Temperaturerhöhung auf eine bestimmtes bzw. in Richtung eines bestimmten Niveaus, etc. Stellvertretend hierfür zeigt das Ausführungsbeispiel einen Wärmetauscher WT1, der von dem Primärkraftstoff durchströmt wird, wobei der Temperaturkreis der Sekundärseite des Wärmetauscher WT1 nur angedeutet ist. Prinzipiell kann der Sekundärseite erwärmte Motorkühlflüssigkeit zugeführt werden oder Abgaswärme, z.B. auch über einen Zwischenkreis, der seine Wärme über einen im Abgaspfad bspw. strömungsabwärts der Abgasnachbehandlungseinrichtung 30 installierten Wärmetauscher (nicht eingezeichnet) bezieht. Die besagte Konditionierung des Primärkraftstoffes zum Reformator 20 kann selbstverständlich auch über mehre Stufen erfolgen, z.B. eine Kaskade von Wärmetauschern WT1 längs des zweiten Kraftstoffzuführungspfades zwischen dem Primärkraftstoffspeicher 10 und Reformator 20. Insbesondere kann die Sekundärseite des Wärmetauschern WT1 strömungsabwärts zu der Sekundärseite des im Reformator integrierten Wärmetauschers angeordnet sein (nicht eingezeichnet). Bei einer solchen Anordnung gelangt bevorzugt der Abgasteilstrom 23 vom Ausgang der Sekundärseite des Wärmetauschers WT1 in den Ladeluftpfad.

Optional verfügt das erfindungsgemäße System über eine weitere bzw. die eigentliche Abgasrückführung, die sich über das AGR-Ventil V8 und einen AGR-Kühler WT2 erstreckt.

Bei der Reformation des Primärkraftstoffs entstehen zwei sogenannte Reformate. Bei dem ersten Reformat handelt es sich idealerweise um reinen Wasserstoff und bei dem zweiten Reformat handelt es sich idealerweise um einen Stoff, der frei von Wasserstoff ist und zumindest im Allgemeinen keine direkte chemische Funktion mehr im erfindungsgemäßen System erfüllt. Wie erwähnt handelt es sich bei einer Verwendung von NH₃ als Primärkraftstoff bei dem zweiten Reformat um Stickstoff. Im erfindungsgemäßen System ist jedoch noch eine Nutzung der thermischen Energie des zweiten Reformats möglich. Bevorzugt wird ein solcher Primärkraftstoff verwendet, bei dem das zweite Reformat wieder ein Ausgangsstoff zur Reproduktion des Primärkraftstoffes ist, wobei klarerweise diese Reproduktion eine Hinzuführung von äusserer Energie erfordert und in aller Regel ausserhalb des Fahrzeuges erfolgt, in dem das erfindungsgemäße System zum Einsatz kommt.

Je nach Primärkraftstoff und je nach den Werkstoffen der aktiven Schicht des im Reformator 20 enthalten Katalysators ist ein bestimmtes Druckniveau und v.a. das Erreichen einer bestimmten Temperatur zur Erreichung einer hohen Konversionsrate nötig. Ausserhalb passender Betriebsbedingungen - insbesondere bei einem Kaltstart und der sich daran unmittelbar anschliessenden Betriebsphase der Verbrennungskraftmaschine - liegt beim Betreiben des Reformators 20 ein vergleichsweise hoher Schlupf des Primärkraftstoffs vor, was klarerweise dem Systemwirkungsgrad schadet und möglicherweise mindestens eine zusätzliche Massnahme entlang desjenigen Pfades erfordert, der idealerweise eigentlich nur durch das zweite Reformat durchströmt werden sollte. Im Fall, dass das zweite Reformat von einem Schlupf des Primärkraftstoffes begleitet wird und das zweite Reformat unter einer entsprechenden Reinheit an die Umgebung abgegeben werden darf und dies so gewünscht wird, ist als Massnahme eine entsprechende Nachbehandlung erforderlich. Bei bestehendem Risiko, dass die Konditionierung des Reformators 20 und des zugeführten Primärkraftstoffes nicht zu jeder Zeit einen für die vorgesehene Anwendung ausreichend hohen Reinheitsgrad des ersten Reformats, resp. des Sekundärkraftstoffes und/oder des zweiten Reformats absichert, sollte das erfindungsgemäße System mit dem besagten Sekundärkraftstoffspeicher 21 ausgestattet sein. Sodann kann der Sekundärkraftstoff übergangsweise aus diesem Speicher 21 bezogen werden, der später bei Vorliegen entsprechend passender Betriebsbedingungen wieder aufgefüllt werden kann.

Bei Erreichung der Betriebstemperatur einer für das erfindungsgemäße System vorgesehenen Verbrennungskraftmaschine 1 und diese bspw. als Wasserstoffmotor ausgeführt ist, liegen im Bereich des Abgassammlers 14 die Abgastemperaturen in einer Grössenordnung von 600° C bis 900° C. Für NH₃, das bereits erwähnte Beispiel eines bevorzugten Primärkraftstoffs, wird bei einem Reformator 20, dessen aktive Fläche aus Ruthenium besteht, bereits bei Temperaturen von 550° C eine Konversionsrate von ca. 95 % erreicht, d.h. es verbleibt ein NH₃-Schlupf von 5 %; bei einer Temperatur von 600° C handelt es sich bei dem ersten Reformat um nahezu reinen Wasserstoff. Unter Verwendung von weniger teuren Materialien, z.B. einer Nickel-Platin- oder einer Nickel-Palladium-Legierung ist zur Erzielung einer solchen Konversionsrate eine Temperatur von 650° C nötig.

NH₃ ist nicht zuletzt deshalb ein bevorzugter Primärkraftstoff, weil es sich bei dem zweiten Reformat um Stickstoff handelt und dessen Ablassen an die Umgebungsluft zulässig und unbedenklich ist, da die atmosphärische Luft zu ca. 79 % aus Stickstoff besteht. Strömungsaufwärts seines Austritts aus dem erfindungsgemäßen System kann das zweite Reformat über eine Vorrichtung zum Abbau des ggf. vorliegenden NH₃-Schlupfes vorhanden sein (nicht eingezeichnet), z.B. ein Oxidationskatalysator. Vorteilhaft ist die Ausstattung des Oxidationskatalysators mit einer Heizvorrichtung, zu der bei Bedarf externe Energie zugeführt wird, da vergleichsweise niedrige Temperaturen bei der Reformierung ursächlich für einen vergleichsweise hohen NH₃-Schlupf sind.

Mit dem erfindungsgemäßen System lassen sich durch entsprechende Anpassungen auch solche Primärkraftstoffe verwenden, bei denen das zweite Reformat nicht an die Umgebung abgegeben wird. In einem solchen Fall wird das erfindungsgemäße System mit einem weiteren Speicher (nicht dargestellt) ausgestattet, dem das zweite Reformat oder ggf. ein daraus mittels Nachbehandlung umgewandeltes Endprodukt zugeführt wird. Neben einer Betankung des Primärkraftstoffspeichers 10 ist dann klarerweise eine Entleerung jenes Speichers notwendig.

In einer vorteilhaften Ausführung wird das zweite Reformat bzw. das besagte Endprodukt quasi an demselben Ort gespeichert, an dem unmittelbar zuvor der Primärkraftstoff gespeichert worden ist, was bspw. durch die Verwendung eines Faltenbalgtanks oder eines Kolbenspeichers möglich ist. Dieses Grundprinzip stellt zur Nutzung bestimmter Primärkraftstoffe eine optionale Verbesserung des erfindungsgemäßen Systems dar. Sofern jedoch lediglich die Vorkammern mit dem Sekundärkraftstoff versorgt werden, derweil die Brennräume ausschliesslich mit dem Primärkraftstoff versorgt werden, wäre aufgrund der geringen anfallenden Menge des zweiten Reformats die Verhältnismässigkeit für den erhöhten Aufwand eines Faltenbalgtanks oder eines Kolbenspeichers anstelle eines kleinen separaten Tanks aus Kostengründen wohl nicht wirtschaftlich. In einer anderen Ausführungsform des erfindungsgemäßen Systems, bei dem eine Mischung von molekularem Wasserstoff mit dem Primärkraftstoff zur gemeinsamen Verbrennung vorgesehen ist, können entsprechend höhere Mengen des zweiten Reformats anfallen und sich daher der Mehraufwand eines Faltenbalgtanks oder eines Kolbenspeichers positiv auswirken, bspw. auf die Einbaufähigkeit des erfindungsgemäßen Systems in ein Fahrzeug; insbesondere, wenn es sich um ein Fahrzeug mit einem für den Einbau beschränkten Volumen handelt, bspw. ein Strassenfahrzeug oder eine mobile Arbeitsmaschine.

Das erfindungsgemäße System kann rein technisch selbstverständlich unabhängig davon betrieben werden, ob ein geeigneter Primärkraftstoff fossil oder regenerativ basiert hergestellt worden ist. Allerdings sieht die gewollte Nutzung des erfindungsgemäßen Systems den Einsatz von regenerativ erzeugtem Primärkraftstoff vor oder zumindest, dass die Herstellung überwiegend regenerativ basiert ist. An dieser Stelle sei erwähnt, dass es sich bei Methan nicht zwangsläufig um Erdgas, d.h. nicht zwangsläufig um eine fossile Ressource handelt. Durch die seit langem bekannte Möglichkeit den benötigten Wasserstoff (H₂) mittels Elektrolyse zu produzieren und der mittlerweile durchführbaren synthetischen Hydrierung von Kohlendioxid (CO₂), besteht mittlerweile auch eine Verfügbarkeit von regenerativ erzeugtem Methan (CH₄) ohne eines Einsatzes von Biomasse. Demzufolge kann davon ausgegangen werden, dass in absehbarer Zeit entsprechend längerkettige CH-Moleküle regenerativ basiert synthetisch herstellbar sein werden, die den Vorteil einer höheren Volumetrischen Energiedichte aufweisen und in dem erfindungsgemässen System verwendet werden können, welches entsprechend anzupassen ist.

In einer bevorzugten Ausführung lässt sich die Wasserstoff-Beimischungsrate der in den Brennraum zugeführten Kraftstoffkomponenten, d.h. dem Primärkraftstoff und dem Wasserstoff während des Motorbetriebs ändern, was besonders bevorzugt über eine entsprechende Software erfolgt, in der entsprechende Parametrierungen und/ oder Modellbildungen hinterlegt sind, wodurch eine jeweils optimale Wasserstoff-Beimischungsrate ermittelt wird, die dann aktuatorisch umgesetzt wird.

Das Ändern einer Wasserstoff-Beimischungsrate der in den Brennraum zugeführten Kraftstoffkomponenten schafft die Möglichkeit einer On-board Teilkompensation von ggf. vorliegenden Defiziten der Kraftstoffqualität (s.u.), die an der Systemgrenze zur Verfügung steht und kann darüber hinaus unter folgenden Situationen ebenfalls sehr vorteilhaft sein:
Sofern die Konstellation der momentanen bzw. in Kürze zu erwartender Temperaturen des Motorabgases und aktiver Oberflächen der Abgasnachbehandlungseinrichtung erwarten lassen, dass mindestens ein bestimmter Emissionsgrenzwert überschritten werden könnte bzw. überschritten werden wird, kann bereits proaktiv die dem Brennraum zugeführte Kraftstoff-Zusammensetzung verändert werden, um in Bezug auf die Systememissionen (bspw. den Emissionen eines Fahrzeugs) ein momentanes Defizit der Wirksamkeit der Abgasnachbehandlungseinrichtung 30 auszugleichen. Gegebenenfalls lässt sich durch diese erfindungsgemäße Möglichkeit, ohne Beeinträchtigung des Drehzahl-Drehmomenten-Arbeitspunktes der Verbrennungskraftmaschine 1 eine Reduzierung der Rohemissionen oder ein Skalierungseffekt der Abgasnachbehandlungseinrichtung 30 erzielen. Sofern die Verbrennungskraftmaschine 1 in einer Anwendung vergleichsweise selten im Arbeitsbereich maximaler und annähernd maximaler Emissionen betrieben werden muss, um bspw. kurzzeitig auftretende Maximalleistungen bereitstellen zu können und dabei zumindest ein Bestandteil der Abgasnachbehandlungseinrichtung 30 lediglich zur Abdeckung dieser vergleichsweise selten auftretenden Betriebssituationen in der nächstgrösseren Dimensionierung ausgelegt werden müsste, kann es in Summe vorteilhaft sein, auf Letzteres zu verzichten und während einer solchen Betriebssituationen unter Wasserstoff-Mehrverbrauch in Bezug auf die Systememissionen ein momentanes Defizit der Wirksamkeit der Abgasnachbehandlungseinrichtung 30 auszugleichen.

Sofern ein gewisser Rückgang der Wirksamkeit der Abgasnachbehandlungseinrichtung 30 bereits detektiert oder prädiziert wird, und eine augenblickliche System-Stilllegung zur Servicedurchführung besonders ungünstig ist, weil bestimmte Arbeiten vorher beendet werden sollten etc., könnte ebenfalls die gleiche Betriebsstrategie angewendet werden, damit ein Weiterarbeiten unter Einhaltung der Emissionsgrenzwerte möglich ist.

Wie vorstehend bereits erwähnt wurde, kann der Sekundärkraftstoff anstatt in eine etwaige Vorkammer der Verbrennungskraftmaschine alternativ auch direkt in den Brennraum eingespritzt werden. Hierfür ist eine separate Zuführung des molekularen Wasserstoffs in den Brennraum vor und zwar im Nahbereich eines von aussen auslösbarem primären Zündereignisses sinnvoll. Vorzugsweise erfolgt die Zuführung des molekularen Wasserstoffs vergleichsweise nah am Zündzeitpunkt der Zündvorrichtung. Damit erfolgt der vergleichsweise geringe Energieeintrag der Primärzündung vermehrt in demjenigen Teilvolumen des Brennraums in dem vermehrt Wasserstoff für den vorhandenen Sauerstoff als Reaktionspartner zur Verfügung steht. Sofern die Zündtemperatur von Wasserstoff noch überschritten wird, genügen auch bei einem extremen Wasserstoffüberschuss gegenüber dem Sauerstoffvorkommen deutlich kleinere Energieportionen, um das Verbrennen von Wasserstoff auszulösen als dies zum Auslösen einer Verbrennung des Primärkraftstoffes der Fall ist. Sobald ein bestimmtes Quantum der Wasserstoffverbrennung ausgelöst ist, steht eine vergleichsweise hohe Aktivierungsenergie zum Entflammen des Primärkraftstoffes bereit. Bezogen auf den Energieinhalt ist im Nennbetrieb der Verbrennungskraftmaschine die Menge des zugeführten Primärkraftstoffs in etwa 10 Mal so hoch wie die Menge des zugeführten Wasserstoffes.

Ein Vorteil dieser Ausführung ist eine Einsparung der Vorkammer und die Möglichkeit, dass man als zusätzlichen Freiheitsgrad der Verbrennung die einsetzbare Wasserstoffmenge in gewissen Grenzen variieren kann (s.u.). Besteht hingegen das Bestreben eines möglichst niedrigen Wasserstoffverbrauchs (s.u.), wird die Fähigkeit des Wasserstoffes als Zündverstärker zu dienen, unter Einsatz einer Vorkammer mit eigener Wasserstoffzuführung, d.h. einer gespülten Vorkammer deutlich besser genutzt.

Eine weitere alternative Ausführungsform sieht eine Anreicherung des Primärkraftstoffs mit Wasserstoff vor. Hierbei werden der Primärkraftstoff und der on-line mittels Reformation erzeugte molekulare Wasserstoff, dem optional ein Pufferspeicher zur Verfügung steht, gemeinsam einem Brennraum zugeführt, bspw. über eine gemeinsame Kraftstoff-Hochdruckeinspritzung, über eine Saugrohreinspritzung 13 oder es erfolgt bereits eine Zusammenführung vor oder in einem Luft-Gasmischer. In allen diesen Varianten dient die Beimischung des molekularen Wasserstoffs zur Beeinflussung der Brenngas-Luftgemisch Eigenschaften, wodurch eine verbesserte Zündfähigkeit bestehen kann und sich ein erhöhter Wirkungsgrad ergeben kann und/oder eine Absenkung der Abgas-Rohemissionen.

Eine Steigerung des Anteils an molekularem Wasserstoff in der Kraftstoffmischung ermöglicht eine Erhöhung des Verbrennungsluftverhältnisses Lambda, was zu einer Wirkungsgraderhöhung führt. Durch eine entsprechend starke Anreicherung des Kraftstoffes durch molekularen Wasserstoff kann die Verbrennungskraftmaschine 1 auch noch bei einer sehr starken Erhöhung des Verbrennungsluftverhältnisses betrieben werden bei der schliesslich geringere NOx-Emissionen vorliegen. Optional können die Brennräume der Verbrennungskraftmaschine 1 mit einer ungespülten Vorkammer ausgestattet sein, bspw. in der Ausführungsform einer Vorkammerzündkerze. Eine solche Massnahme führt auf der einen Seite zu einem erhöhten Aufwand, aber ermöglicht auf der anderen Seite unter Beibehaltung des Verbrennungsluftverhältnisses eine Einsparung von Wasserstoff, wodurch unter Umständen ein kleinerer Reformator eingesetzt werden kann.

Das erfindungsgemäße System kommt bevorzugt in Fahrzeugen bzw. mobilen Arbeitsmaschinen zum Einsatz. Möglich ist jedoch ebenso der Einsatz innerhalb stationärer Anlagen, z.B. für eine Genset-Anwendung, wo ein im Sinne der Erfindung als Primärkraftstoff geeigneter Energieträger quasi als Fliessgut zur Verfügung steht. Die Erfindung kann hierbei zur verbrennungsmotorischen Nutzung von Kraftstoffen (insbesondere sogenannter Schwachgase wie Klärgas, Deponiegas etc.) dienen, die anderweitig aufgrund ihrer geringen Qualität nicht genutzt werden können und in einem besonders ungünstigen Fall sogar energetisch ungenutzt als Treibhausgase in die Erdatmosphäre eintreten. Sofern ein kontinuierlicher Zufluss des Primärkraftstoffs zu dem erfindungsgemäßen System sichergestellt ist, kann ein Primärkraftstoffspeicher 10 zur Pufferung für den Primärkraftstoff entfallen. Erfindungsgemäß wird ein Teil des Primärkraftstoffes einem Reformator 20 zugeführt. Ggf. muss stromaufwärts des Reformators 20 eine Kraftstoffreinigung erfolgen, bspw., weil der Primärkraftstoff Verunreinigungen aufweist. Sofern ein Primärkraftstoffspeicher 10 zur Pufferung für den Primärkraftstoff vorhanden ist, erfolgt eine Kraftstoffreinigung vorzugsweise vor dem Eintritt in den Primärkraftstoffspeicher 10 bzw. vor dem Eintritt in das Speichervolumen innerhalb des Primärkraftstoffspeichers 10. In der Betrachtungsebene eines Schaltbildes bestehen beim Einsatz des erfindungsgemäßen Systems in einer mobilen und stationären Anwendung keine weiteren Unterschiede. Für den Stationäreinsatz zur Nutzung von Primärkraftstoffen von geringer Qualität kommt vorzugsweise die Ausführungsform der Erfindung zum Einsatz, bei der der vom Primärkraftstoff abgespaltene molekulare Wasserstoff in einer Vorkammer eingesetzt wird.

Die Vorteile der Erfindung lassen sich wie folgt nochmals zusammenfassen:
- Reduzierung der Prozessenergie zur On-board Aufbereitung des Primärkraftstoffes; die hohe Temperatur zur Dehydrierung im Reformator 20 kann aus dem Abgas bezogen werden, das unmittelbar am Abgassammler 14 entnommen wird. Da die Abgasmenge vergleichsweise gering ist, steht erstens noch eine ausreichend hohe Abgasenergie zur Versorgung der Turbine 41 des Turboladers 40 und die Wirksamkeit der Abgasnachbehandlungseinrichtung 30 bereit und muss zweitens diese Abgasmenge nicht in einer weiteren separaten Abgasnachbehandlungseinrichtung nachbehandelt werden, sondern kann diese Abgasmenge wieder dem Ladeluftpfad zugeführt werden.
- Da im erfindungsgemäßen System nur ein bestimmter Anteil des Primärkraftstoffs durch den Reformator 20 geleitet wird bzw. den Reformationsprozess durchläuft, derweil der höhere Anteil des Primärkraftstoffs direkt von der Verbrennungskraftmaschine 1 verwertet wird, ist die Menge des zweiten Reformats, d.h. das Abscheideprodukt des Reformators, wofür On-board keine weitere Verwendung existiert, deutlich geringer. (N.B.: Üblicherweise handelt es sich bei dem Abscheideprodukt nicht um Abfall, sondern um recycelbares Trägermedium, welches beim nächsten Tankvorgang entnommen wird.) Demzufolge genügt eine wesentlich geringere Aufnahmekapazität zur Aufnahme des zweiten Reformats.
- Es muss lediglich ein einziger Kraftstoff getankt werden.
- Durch das Hinzumischen von Wasserstoff in den Primärkraftstoff kann die Kraftstoffqualität gesteigert werden, was zur Erhöhung des Wirkungsgrades und/oder zu einer Reduzierung der Rohemissionen genutzt werden kann.
- ... oder sogar ausschlaggebend sein, dass ein Primärkraftstoff überhaupt erst als solches nutzbar ist.
- Bei einer entsprechenden Bauform der Verbrennungskraftmaschine 1 (i) der Ausstattung der Hauptbrennräume mit jeweils einer Vorkammer oder (ii) einer entsprechend platzierten und ausgerichteten separaten Einspritzung kann mit Wasserstoff ein besonders zündfähiger Kraftstoff zur Auslösung der Sekundärzündung verwendet werden
- Das erfindungsgemäße System kann für den Abbau der Stickoxide mit einem solchen Katalysator ausgestattet werden, bei dem Wasserstoff als Reduktionsmittel verwendet werden kann. Auf diese Weise kann das manuelle Zuführen des Reduktionsmittels als weiterer Betriebsstoff entfallen. Es können Kraftstoffe verwendet werden, die gleichzeitig die Funktion des Reduktionsmittels übernehmen können.

**Bezugszeichenliste**

| | |
|---|---|
| Verbrennungskraftmaschine | 1 |
| Primärkraftstoffspeicher | 10 |
| Kraftstoffförderpumpe | 11 |
| Kraftstoff-Hochdruckeinspritzungssystem | 12 |
| Luftverteiler | 13 |
| Abgassammler | 14 |
| Reformator | 20 |
| Sekundärkraftstoffspeicher | 21 |
| Kompressor | 22 |
| Abgasteilstrom | 23 |
| Elektrische Heizung | 24 |
| Abgasnachbehandlungseinrichtung | 30 |
| Turbolader | 40 |
| Turbine | 41 |
| Kompressor | 42 |
| Ladeluftkühler | 43 |
| Ventile | V1, V2, V3, V4, V5, V7, |
| Wastegate | V6 |
| AGR-Ventil | V8 |
| Wärmetauscher | WT1, WT2 |

## Patentansprüche

1. Kraftstoffversorgungseinrichtung zum Zuführen eines Kraftstoffs an eine Verbrennungskraftmaschine (1), umfassend
einen Kraftstoffspeicher (10) zur Speicherung eines Primärkraftstoffes und wenigstens zwei parallele Kraftstoffzuführungspfade, die einerseits mit dem Kraftstoffspeicher (10) und andererseits mit der Verbrennungskraftmaschine (1) verbunden sind, wobei
mittels des ersten Kraftstoffzuführungspfad der Primärkraftstoff aus dem Kraftstoffspeicher (10) der Verbrennungskraftmaschine (1) zum Zwecke der Verbrennung zuführbar ist, und
der zweite Kraftstoffzuführungspfad wenigstens eine Reformierungsvorrichtung (20) aufweist, mittels dieser der aus dem Primärkraftstoffspeicher (10) zugeführte Primärkraftstoff in einen Sekundärkraftstoff reformierbar ist, und zumindest ein Teil des erzeugten Sekundärkraftstoffes der Verbrennungskraftmaschine (1) zum Zwecke der Verbrennung zuführbar ist.

2. Kraftstoffversorgungseinrichtung nach Anspruch 1, **dadurch gekennzeichnet, dass** der Sekundärkraftstoff der Verbrennungskraftmaschine (1) zur Erhöhung derjenigen Zündfähigkeit, über die der eigentliche Leistungseintrag auf die Kurbelwelle erfolgt, zuführbar ist.

3. Kraftstoffversorgungseinrichtung nach einem der vorstehenden Ansprüche, **dadurch gekennzeichnet, dass** der Primärkraftstoff mittels des ersten Verbindungspfades einem Einspritzsystem der Verbrennungskraftmaschine (1) und/oder einem Saugrohr (13) der Verbrennungskraftmaschine (1) und/oder einem Luft-/Kraftstoffmischer zuführbar ist.

4. Kraftstoffversorgungseinrichtung nach einem der vorstehenden Ansprüche, **dadurch gekennzeichnet, dass** der Sekundärkraftstoff direkt in einen Brennraum der Verbrennungskraftmaschine einspritzbar ist, bevorzugt im Nahbereich der primären Zündquelle, wobei besonders bevorzugt die Zuführung innerhalb des Zeitpunkts erfolgt, in dem der Energieeintrag der primären Zündquelle erfolgt.

5. Kraftstoffversorgungseinrichtung nach einem der vorstehenden Ansprüche, **dadurch gekennzeichnet, dass** die Zuführung des Sekundärkraftstoffes in den Brennraum der Verbrennungskraftmaschine über eine passive Vorkammer, besonders bevorzugt über eine Vorkammerzündkerze erfolgt.

6. Kraftstoffversorgungseinrichtung nach einem der vorstehenden Ansprüche, **dadurch gekennzeichnet, dass** der Primärkraftstoff und der Sekundärkraftstoff gemeinsam einem Brennraum zuführbar sind, wobei die Zusammenführung des Primärkraftstoffes und des Sekundärkraftstoffes über eine gemeinsame Kraftstoff-Hochdruckeinspritzung oder über eine Saugrohreinspritzung (13) oder über einen Luft-Gasmischer erfolgt.

7. Kraftstoffversorgungseinrichtung nach einem der vorstehenden Ansprüche, **dadurch gekennzeichnet, dass** wenigstens ein dritter Kraftstoffzuführungspfad vorgesehen ist, der den Primärkraftstoffspeicher (10) mit einer Abgasnachbehandlungseinrichtung (30) verbindet, um den Primärkraftstoff unbehandelt oder mittels einer in den dritten Kraftstoffzuführungspfad integrierten zusätzlichen Reformierungsvorrichtung (20') reformiert als Reduktionsmittel zuzuführen.

8. Kraftstoffversorgungseinrichtung nach einem der vorstehenden Ansprüche, **dadurch gekennzeichnet, dass** stromabwärts nach der Reformierungsvorrichtung (20) ein Sekundärkraftstoffspeicher (21), insbesondere ein Druckspeicher, zur Speicherung des reformierten Sekundärkraftstoffes vorgesehen ist und/oder wenigstens ein Kompressor/Pumpe (22) enthalten ist, um den reformierten Sekundärkraftstoff unter erhöhtem Druck der Verbrennungskraftmaschine (1) und/oder dem Sekundärkraftstoffspeicher (21) und/oder einer Abgasnachbehandlungseinrichtung (30) zuführen zu können.

9. Kraftstoffversorgungseinrichtung nach einem der vorstehenden Ansprüche, **dadurch gekennzeichnet, dass** der Primärkraftstoff in Flüssigform oder Gasform im Primärkraftstoffspeicher (10) gespeichert bzw. speicherbar ist, wobei es sich bevorzugt um ein im Primärkraftstoffspeicher (10) gespeichertes Flüssiggas handelt, beispielsweise um Ammoniak, und/oder der reformierte Sekundärkraftstoff molekularer Wasserstoff ist, wobei vorzugsweise bei einem als Flüssiggas gespeicherten Primärkraftstoff Mittel zur Verdichtung des in Flüssigform vorliegenden Primärkraftstoffes vorgesehen sind, bevorzugt in Form einer Pumpe, die besonders bevorzugt zugleich als Primärkraftstoffförderpumpe fungiert und die ganz besonders bevorzugt in dem Primärkraftstofftank (10) integriert ist.

10. Kraftstoffversorgungseinrichtung nach einem der vorstehenden Ansprüche, **dadurch gekennzeichnet, dass** eine Abgaszuführungsleitung vorgesehen ist, über die ein Teilstrom (23) des Abgases der Verbrennungskraftmaschine (1) durch die Reformierungsvorrichtung (20) zur Erwärmung der aktiven Oberflächen des integralen Katalysators und/oder durch die Sekundärseite eines stromaufwärts der Reformierungsvorrichtung (20) vorhandenen Wärmetauschers (WT1) durchleitbar ist, wobei vorzugsweise die Entnahme des Abgasteilstroms (23) am bzw. unmittelbar stromabwärts eines Abgassammlers (14) der Verbrennungskraftmaschine (1) erfolgt, bevorzugt stromaufwärts der Abgasnachbehandlungseinrichtung (30), insbesondere stromaufwärts der Turbine (41) des Abgasturboladers (40).

11. Kraftstoffversorgungseinrichtung nach Anspruch 10, **dadurch gekennzeichnet, dass** der durch die Reformierungsvorrichtung (20) und/oder die Sekundärseite des Wärmetauschers (WT1) durchgeführte Abgasteilstrom (23) in den Ladeluftpfad der Verbrennungskraftmaschine (1) geleitet wird, bevorzugt stromabwärts eines Ladeluftkühlers (43) des Ladeluftpfades.

12. Kraftstoffversorgungseinrichtung nach einem der vorstehenden Ansprüche, **dadurch gekennzeichnet, dass** die Kraftstoffversorgungseinrichtung und/oder die Reformierungsvorrichtung (20) wenigstens ein zusätzliches Speichermittel zur Speicherung wenigstens eines zusätzlichen aus dem Primärkraftstoff erzeugten weiteren Reformats aufweist, wobei das Speichermittel vorzugsweise Bestandteil eines als Faltenbalgtank oder Kolbenspeicher ausgeführten Primärkraftstoffspeichers (10) sein kann und/oder die Reformierungsvorrichtung eine Zuleitung vorsieht, um das weitere Reformat dem Ladeluftpfad zuzuführen, bevorzugt stromabwärts eines Ladeluftkühlers (43) des Ladeluftpfades.

13. Kraftstoffversorgungseinrichtung umfassend eine Steuereinheit konfiguriert zur Bestimmung einer optimalen Beimischungsrate des Sekundärkraftstoffes zu dem in den Brennraum der Verbrennungskraftmaschine (1) zuzuführenden Primärkraftstoff auf Grundlage hinterlegter Parametrierungen und/oder Modellbildungen, wobei die Kraftstoffversorgungseinrichtung zur Befähigung einer Umsetzung der als optimal ermittelten Beimischungsrate des Sekundärkraftstoffes mit mindestens einem entsprechenden Aktuator ausgestattet ist.

14. System einer Kraftstoffversorgungseinrichtung gemäß einem der vorstehenden Ansprüche, umfassend eine Verbrennungskraftmaschine (1) sowie optional eine Abgasnachbehandlungseinrichtung (30) und/oder eine Turboaufladung und/oder einer Abgasrückführung, deren Abgasrückführungsrate über ein AGR-Ventil V8 einstellbar ist.

15. Verfahren zur Kraftstoffversorgung einer Verbrennungskraftmaschine (1) aus einem Primärkraftstofftank (10), **dadurch gekennzeichnet, dass** der Verbrennungskraftmaschine (1) als Hauptbrennstoff chemisch unbehandelter Primärkraftstoff zugeführt wird und ein Teil des verfügbaren Primärkraftstoffes mittels einer Reformierungsvorrichtung (20) in einen Sekundärkraftstoff reformiert wird, derweil zumindest ein gewisser Anteil davon der Verbrennungskraftmaschine (1) als Pilotkraftstoff oder als Beimischungsrate zugeführt wird.

16. Verfahren nach Anspruch 15, **dadurch gekennzeichnet, dass** das Verfahren mittels einer Kraftstoffversorgungseinrichtung gemäß einem der vorstehenden Ansprüche 1 bis 14 ausgeführt wird.

17. Verfahren nach einem der Ansprüche 15 oder 16, **dadurch gekennzeichnet, dass** die Einsatzmenge des Sekundärkraftstoffes während des Motorbetriebs verändert wird, insbesondere wird auf Grundlage einer in einer Steuereinheit hinterlegten Parametrierung und/oder Modelbildungen eine betriebssituationsabhängig optimale Einsatzmenge bestimmt und steuerungs- und/oder regelungstechnisch umgesetzt.

18. Verfahren nach einem Ansprüche 15 bis 17, **dadurch gekennzeichnet, dass** die optimale Einsatzmenge des Sekundärkraftstoffes abhängig von der aktuellen Betriebssituation des Verbrennungsprozesses der Verbrennungskraftmaschine (1) und/oder einer Abgasnachbehandlungseinrichtung (30) und/oder der Qualität des Primärkraftstoffes ermittelt wird.

19. Verfahren nach einem der Ansprüche 15 bis 18, **dadurch gekennzeichnet, dass**, es sich bei dem Sekundärkraftstoff, der als Pilotkraftstoff fungiert und/oder der die Beimischung zu dem sich in innerhalb des Hauptbrennraums zuzuführenden Primärkraftstoff darstellt und/oder dem Abgasnachbehandlungssystem zugeführt wird, um molekularen Wasserstoff handeln kann.
